# EUROPÄISCHE PATENTSCHRIFT

(11) **EP 2 919 352 B1**
(45) Veröffentlichungstag und Bekanntmachung des Hinweises auf die Patenterteilung: **22.07.2020**
(21) Anmeldenummer: 15152154.9
(22) Anmeldetag: 22.01.2015
(51) Int. Cl.: H02J 3/14, H02J 3/26, H02J 13/00

(54) **Verfahren zum Betreiben eines elektrischen Teilnehmers, einer elektrischen Messstelle an einem Teilnehmernetz sowie einen elektrischen Teilnehmer als auch eine elektrische Messstelle**
Method for operating an electric subscriber, an electrical measuring point in a subscriber network and an electrical subscriber and electric measuring point
Procédé de fonctionnement d'un usager électrique, d'un point de mesure électrique sur un réseau d'usager électrique et usager électrique et point de mesure électrique

(30) Priorität: 12.03.2014 DE 102014003250
(43) Veröffentlichungstag der Anmeldung: 16.09.2015
(73) Patentinhaber: innogy Netze Deutschland GmbH, 45128 Essen (DE)
(72) Erfinder: Gaul, Armin, Dr.- Ing., 59379 Selm (DE); Diefenbach, Ingo, Dr.-Ing., 59425 Unna (DE)
(74) Vertreter: Cohausz & Florack

(56) Entgegenhaltungen:
- EP-A1- 2 475 059
- US-A1- 2004 196 604
- US-A1- 2012 078 428
- US-A1- 2013 054 204

## Beschreibung

Der Gegenstand betrifft ein Verfahren zum Betreiben eines elektrischen Teilnehmers, einer elektrischen Messstelle an einem Teilnehmernetz sowie einen elektrischen Teilnehmer als auch eine elektrische Messstelle.

Der Betrieb eines Mehrphasennetzes, insbesondere eines Dreiphasennetzes, beispielsweise eines Drehstromnetzes, ist weitgehend geregelt. Hierbei ist insbesondere die Leistungsaufnahme eines Teilnehmernetzes pro Phase beschränkt, um zu verhindern, dass eine Differenz einer elektrischen Größe zwischen den Phasen einen Höchstwert überschreitet. Durch Unsymmetrien an der Last entstehen erhöhte Verluste in dem Teilnehmernetz, welche zu vermeiden sind. Insbesondere führt eine ungleiche Belastung des Teilnehmernetzes an den Phasen zu einer Nullpunktverschiebung/Sternpunktverschiebung. Um diese auszugleichen sind Ausgleichsströme im Nullleiter notwendig, die unnötige Verluste verursachen.

Darüber hinaus hat eine aufgrund ungleicher Belastung unsymmetrische Spannung im Drehstromnetz negative Auswirkungen auf Verbraucher, die auf eine möglichst symmetrische Spannung angewiesen sind (z.B. Drehstrom-Asynchronmotoren für kontinuierliches Drehmoment. Bei nicht kontinuierlichem Drehmoment besteht die Gefahr von Lagerschäden aufgrund eines "nicht rund laufen" des Motors).

In der Regel ist die Lastverteilung im Dreiphasennetz aufgrund einer statistischen Verteilung im Wesentlichen gleich. So ist beispielsweise in einem Haushalt das Teilnehmernetz durch den Elektriker an den drei Phasen L1, L2 und L3 des Verteilnetzes angeschlossen. Hierbei erfolgt ein Anschluss der Teilnehmer des Haushaltes an eine der drei Phasen L1, L2, L3 im Wesentlichen nach dem Zufallsprinzip, nämlich je nachdem, an welche Phase der Elektriker die jeweilige Zuleitung im Verteilkasten angeschlossen hat. Aufgrund dieser statistischen Verteilung einer Vielzahl von leistungsschwachen Teilnehmern ist davon auszugehen, dass die Unsymmetrie im Teilnehmernetz und mithin im Verteilnetz, hier der Niederspannungsebene, unbeachtlich ist und es eine mehr oder weniger gleichmäßige Phasenauslastung gibt.

Um jedoch signifikante Unsymmetrien, insbesondere durch den Betrieb einzelner leistungsstarker Teilnehmer zu verhindern, wird in den technischen Anschlussbedingungen gefordert, dass leistungsstarke Verbraucher mit einer Grenzleistung, in Deutschland beispielsweise über 4,6 kVA, an allen drei Phasen des Teilnehmernetzes zu betreiben sind. Die Verbraucher müssen so ausgelegt sein, dass sie eine jeweils gleichmäßige Phasenbelastung hervorrufen. Außerdem ist in den technischen Anschlussbedingungen gefordert, dass die maximale Unsymmetrie pro Netzanschluss einen Maximalwert, in Deutschland beispielsweise 4,6 kVA, nicht überschreiten darf. Dies führt zu Einschränkungen der Teilnehmer, insbesondere dass Teilnehmer die nur einphasig betrieben werden, Leistungen von beispielsweise 4,6 kVA, insbesondere Leistungen, die der maximal zulässigen Unsymmetrie genügen, nicht überschreiten dürfen.

So ist es beispielsweise in Deutschland gefordert, dass einphasig angeschlossene Photovoltaikeinrichtungen nur maximal 4,6 kVA in diese Phase in das Verteilnetz einspeisen dürfen. Auch einphasig ladende Elektrofahrzeuge dürfen aus dieser einzelnen Phase nicht mehr als 4,6 kVA beziehen. Die technischen Anschlussbedingungen führen somit zu Leistungsbeschränkung angeschlossener Teilnehmer aufgrund der geforderten Symmetrie an den Phasen des Verteilnetzes, welche im Zweifel zu einer Leistungseinschränkung der Teilnehmer führen kann. Die tatsächlich über das Teilnehmernetz übertragbare Leistung ist wesentlich höher als die angegebene Grenzleistung, darf jedoch aus Gründen der geforderten Symmetrie am Übergabepunkt die Grenzleistung nicht überschreiten.

Die EP 2 475 059 A1 offenbart Lösungen zum Ausgleichen von Lasten in einem Verteilungsstromversorgungssystem. Eine Ausführungsform umfasst ein Lastausgleichssystem, einen Determinator zum Bestimmen einer ausgeglichenen Lastverteilung und einen Tramsitter zum Übertragen von Befehlen für eine ausgeglichene Lastverteilung.
Die US 2004/0196604 A1 beschreibt ein Steuersystem zum Beseitigen von Lastungleichgewichten der Dreiphasenschaltung und enthält Phasenstromdetektoren zum Erfassen von Phasenströmen, die durch einen Sekundärkreis eines Stromwandlers fließen, der in Hochspannungsverteilungsleitungen vorgesehen ist.

Dem Gegenstand lag die Aufgabe zugrunde, die maximal zulässige Leistung von Teilnehmer an Mehrphasennetzen, insbesondere an mehrphasigen Teilnehmernetzen, zu erhöhen.

Diese Aufgabe wird gegenständlich durch ein Verfahren nach Anspruch 1, ein Verfahren nach Anspruch 10 sowie eine elektrische Messstelle nach Anspruch 11 gelöst.

Es ist erkannt worden, dass mit neuartigen Messstellen, insbesondere sogenannten Smart Meter, in einem Teilnehmernetz nicht nur die Gesamtsystemleistung erfasst werden kann, sondern die Leistungsbilanz einer jeden Phase. Es kann somit erfasst werden, welche Ströme pro Phase fließen und ermittelt werden, wie groß die Unsymmetrie zwischen den einzelnen Phasen ist. Mittels dieser Information ist es möglich, die Teilnehmer des Teilnehmernetzes so zu steuern, dass die Belastung der einzelnen Phasen symmetriert werden kann. Dies führt zu einer besseren Netzauslastung, da jede Phase möglichst optimiert genutzt wird und andererseits können Restriktionen hinsichtlich der maximalen Leistung pro Phase von Teilnehmer aufgehoben bzw. erhöht werden, da sich die Teilnehmer hinsichtlich der Phasenbelastung gegenseitig kompensieren können.

Gegenständlich kann ein Teilnehmernetz z.B. ein Hausverteilnetz sein. Das entsprechende Verteilnetz kann dann das Niederspannungsnetz des Energieversorgers bzw. Verteilnetzbetreibers sein. Der Übergabepunkt kann der Hausanschlusspunkt sein. In diesem Fall ist es möglich, Unsymmetrien innerhalb des Hausnetzes festzustellen und durch entsprechenden Eingriff in den Betrieb der Teilnehmer zumindest teilweise zu kompensieren. Insbesondere kann eine Verschiebung des Nullpunktes bzw. Sternpunktes bewirkt werden, derart, dass dieser sich dem Sternpunkt bei symmetrischer Last annähert. Insbesondere sollen Nullleiterströme verkleinert, vorzugsweise minimiert werden.

Auch ist es gegenständlich möglich, dass ein Teilnehmernetz beispielsweise ein Ortsverteilnetz in der Niederspannungsebene ist und der Übergabepunkt vorzugsweise der Ortsnetztrafo, insbesondere der Transformator zwischen der Mittelspannungsebene und der Niederspannungsebene ist. In diesem Fall kann festgestellt werden, in welchem Umfang Unsymmetrien in der Niederspannungsebene vorhanden sind und durch die entsprechende Kommunikation an die jeweiligen Hausanschlüsse bzw. die dort angeordneten Messeinrichtungen kann diesen Unsymmetrien entgegengewirkt werden. Hierdurch kann die Verteilung der elektrischen Leistung auf die Phasen innerhalb des Ortsverteilnetzes bzw. Niederspannungsnetzes optimiert werden, indem versucht wird, jede Phase möglichst gleich zu belasten. Auch hierdurch kann einer durch Unsymmetrien entstandenen Sternpunkt bzw. Nullpunktverschiebung entgegen gewirkt werden.

Zur Ermittlung der Belastung der einzelnen Phasen ist es zumindest notwendig, eine elektrische Größe, vorzugweise die Stromstärke, an den jeweiligen Phasen zu ermitteln. Dabei ist mindestens notwendig, die elektrische Größe an zumindest zwei Phasen an einem Übergabepunkt zwischen einem Verteilnetz und einem Teilnehmernetz zu erfassen. Insbesondere wird dabei die elektrische Größe in dem Teilnehmernetz, beispielsweise in dem Hausverteilnetz oder dem Ortsverteilnetz, gemessen.

Die jeweils gemessene elektrische Größe, insbesondere die Stromstärke bzw. auch die im Weiteren gemessenen Größen, wie nachfolgend noch erläutert werden wird, können zwischen zumindest den beiden Phasen miteinander verglichen werden und ein Differenzbetrag kann ermittelt werden. Für den Fall, dass an zwei Phasen die elektrische Größe gemessen wird, reicht es aus, die Differenz dieser beiden elektrischen Größen zu erfassen. Anschließend kann der Teilnehmer derart betrieben werden, dass der Differenzbetrag zwischen den elektrischen Größen an den beiden Phasen verringert wird. Hierbei kann der Teilnehmer an diesen zwei Phasen des Teilnehmernetzes angeschlossen sein und je nachdem wie der Differenzbetrag ist, können diese Phasen des Teilnehmernetzes durch den Teilnehmer unterschiedlich belastet oder beaufschlagt werden.

So ist es beispielsweise denkbar, dass ein einphasiger Teilnehmer im Teilnehmernetz mit beispielsweise 2 kVA an der Phase L1 betrieben wird. Die zweite Phase, beispielsweise L2, wäre unbelastet. Ein zweiphasiger Teilnehmer würde an zwei der drei Phasen L1, L2 und L3 gleichmäßig betrieben. Ein dreiphasiger Teilnehmer würde an den Phasen L1, L2 und L3 jeweils gleichmäßig betrieben. Beide unterlägen der Beschränkung, dass die Maximalleistung pro Phase beschränkt ist. Die maximal zur Verfügung stehende Leistung wäre dann bereits durch die 2 kVA des anderen Teilnehmers begrenzt. Außerdem dürfte der Teilnehmer an beiden Phasen die Grenzleistung nicht übersteigen.

Gegenständlich wird in diesem Beispiel nun vorgeschlagen, dass die Phase L2 mit 2 kVA mehr belastet wird, als die Phase L1, um den Differenzbetrag zwischen den beiden Phasen zu verringern bzw. zu minimieren und die Phasenlast zu symmetrieren. Wird der Teilnehmer der nur an der einen Phase betrieben wird nachfolgend ausgeschaltet, kann der gegenständliche Teilnehmer auch an der Phase L1 mit einer höheren Leistung, im Beispiel dann 2 kVA mehr, betrieben werden.

Während des Betriebs kann die Leistung, insbesondere die Stromstärke des Teilnehmers pro Phase angepasst werden, um somit den Differenzbetrag der elektrischen Größe zwischen den beiden Phasen am Übergabepunkt möglichst zu verringern, insbesondere zu minimieren.

Der Teilnehmer wird darüber hinaus auch derart betrieben, dass die Gesamtleistung in dem Teilnehmernetz bzw. die Gesamtleistung des einzelnen Teilnehmers, möglichst groß ist. Das heißt, dass ein Verringern des Differenzbetrages auch dadurch erreicht werden kann, dass der Teilnehmer an einer Phase eine höhere Leistung bezieht als an einer anderen Phase. Insbesondere kann das Verringern des Differenzbetrages dadurch erreicht werden, dass die Leistung auf einer Phase gegenüber der anderen Phase erhöht wird und nicht nur dadurch, dass die Leistung auf einer Phase gegenüber einer anderen Phase verringert wird. Vorzugsweise wird beim Verringern des Differenzbetrages gleichzeitig versucht, dass die maximal vom Teilnehmernetz zu beziehende Leistung erreicht wird. Nur auf den Phasen, an denen eine Belastung des Teilnehmernetzes bereits vorliegt, kann eine niedrigere Leistung bezogen werden.

Zu beachten ist dabei, dass der Teilnehmer gegenständlich an mindestens zwei Phasen des Teilnehmernetzes betrieben wird und somit elektrische Leistung über zumindest die beiden Phasen gleichzeitig bezieht. Während des gleichzeitigen Beziehens der elektrischen Leistung über die zumindest zwei Phasen wird die elektrische Leistung an jeder der Phasen derart eingestellt, dass an dem Übergabepunkt der Differenzbetrag der elektrischen Größen verringert, vorzugsweise minimiert wird. Beim Minimieren des Differenzbetrages kann dabei die elektrische Größe der beiden Phasen am Übergabepunkt zunehmen. Hierbei wird insbesondere eine Sternpunktverschiebung in Richtung eines Nullpunktes bei symmetrischer Belastung bewirkt, so dass Nulleiterströme verringert, insbesondere minimiert werden.

Ein Teilnehmer kann im Teilnehmernetz (z.B. ein Elektrofahrzeug oder eine dezentrale Batteriespeicheranlage) als elektrische Last oder als Stromquelle betrieben werden. Durch gezieltes Ansteuern der verschiedenen Teilnehmer ist es möglich, den Differenzbetrag der elektrischen Größe am Übergabepunkt so einzustellen, dass er einen Grenzwert nicht überschreitet. Insbesondere kann die elektrische Leistung pro Phase derart eingestellt werden, dass diese am Übergabepunkt kleiner einer gesetzlichen Vorgabe, insbesondere kleiner 4,6 kVA, ist. Vorzugsweise werden die elektrischen Größen an den Teilnehmern pro Phase derart unsymmetrisch eingestellt, dass am Übergabepunkt der Sternpunkt möglichst in einer Idealposition, also im Nullpunkt liegt bzw. diesem angenähert wird.

Gemäß einem Ausführungsbespiel ist die elektrische Größe eine elektrische Stromstärke und/oder ein elektrisches Potential, insbesondere eine Spannung zwischen der Phase und einem Nullleiter bzw. der Spannung zwischen den Phasen untereinander und/oder die elektrische Leistung an einer jeweiligen Phase und/oder eine Phasendifferenz zwischen Strom und Spannung an einer jeweiligen Phase. Je nachdem, welche der elektrischen Größen zu symmetrieren ist, kann der Teilnehmer entsprechend betrieben werden. Vorzugsweise erfolgt eine Symmetrierung hinsichtlich möglichst aller genannten elektrischen Größen oder einer Auswahl von mehreren der genannten elektrischen Größen.

Gemäß einem Ausführungsbeispiel wird vorgeschlagen, dass das Teilnehmernetz zumindest drei Phasen aufweist. Ein solches Teilnehmernetz, insbesondere ein Drehstromnetz, ist häufig als Hausverteilnetz oder auch als Ortsverteilnetz vorhanden. Die Phasendifferenz der drei Phasen beträgt in der Regel 120°. Ein mehr als Dreiphasennetz ist jedoch auch möglich. Sobald der Differenzbetrag der elektrischen Größe zwischen jeweils zwei Phasen bei mehr als zwei Phasen ermittelt wird, kann eine Summe der Differenzbeträge der gemessenen elektrischen Größe ermittelt werden. Dabei können zunächst die Differenzen zwischen den elektrischen Größen, insbesondere der Beträge, von jeweils zwei Phasen ermittelt werden. Die Werte, insbesondere die Beträge dieser Differenzen können aufsummiert werden. Anschließend kann ein Teilnehmer, der an zumindest zwei Phasen betrieben wird, derart angewiesen werden, dass sich die Differenzbeträge zwischen zwei Phasen verringern und somit die Summe der Differenzbeträge sich ebenfalls verringert.

Zum Verringern des Differenzbetrages kann es erforderlich sein, dass die elektrische Leistung des Teilnehmers, sei es als Last oder als Stromquelle, an zumindest einer Phase verändert wird. Insbesondere kann die elektrische Leistung an jeder Phase getrennt eingestellt werden. Um den Differenzbetrag zu verringern, wird vorgeschlagen, dass eine zulässige Stromstärke für zumindest eine Phase des Teilnehmers eingestellt wird. Der Teilnehmer, beispielsweise ein Ladesteuergerät eines Elektrofahrzeugs, kann dann für jede Phase einzeln entscheiden, wie groß sein Innenwiderstand ist und mithin welche Stromstärke in einer jeden Phase des Teilnehmers maximal erreicht werden kann. Andererseits ist es auch möglich, dass bei einer Stromquelle, beispielsweise einer Photovoltaikanlage oder einem anderen Generator, beispielsweise einer Windkraftanlage oder einer Biomasseanlage, die pro Phase eingespeiste Stromstärke entsprechend eingestellt wird. Auch ist es möglich, dass die elektrische Leistung für jede Phase des Teilnehmers eingestellt wird.

In der Regel befindet sich die elektrische Leistung im Gleichlauf mit der Stromstärke des Teilnehmers, da die elektrische Spannung einer jeden Phase durch das Verteilnetz vorgegeben ist. Darüber hinaus ist es möglich, dass die elektrische Blind- und/oder Wirkleistung für jede Phase des Teilnehmers eingestellt wird. Eine Blind- oder Wirkleistungskompensation ist somit möglich. Hierbei kann insbesondere die Phasendifferenz zwischen Strom und Spannung auf einer jeden Phase eingestellt werden.

In vorteilhafter Weise werden die elektrischen Größen der Phasen an dem Übergabepunkt einander angenähert. Dies bedeutet, dass die Werte der elektrischen Größen pro Phase durch den Betrieb des Teilnehmers verändert, insbesondere angehoben oder abgesenkt werden können, insbesondere so, dass sie sich einander zumindest betragsmäßig annähern. Ziel des Betreibens des Teilnehmers ist es dabei, eine möglichst symmetrische Verteilung der elektrischen Leistung über alle Phasen zu erzielen. Die elektrische Leistung soll dabei für einen jeweiligen Teilnehmer möglichst maximiert sein, so dass die zulässigen Grenzwerte der elektrischen Größe möglichst ausgeschöpft werden. Insbesondere kann die Stromstärke einer jeden Phase auf einen maximal zulässigen Wert begrenzt sein, beispielsweise 63 A in Deutschland oder 35 A in den Niederlanden. Beim Betreiben des Teilnehmers muss diese durch das Verteilnetz vorgegebene maximale Stromstärke eingehalten werden.

Bei dem Verringern des Differenzbetrages kann auf jeder Phase die Stromstärke erhöht werden, solange die maximal zulässige Stromstärke nicht überschritten wird. Das heißt, dass für das Verringern des Differenzbetrages auf jeder Phase die elektrische Größe, insbesondere die Stromstärke vergrößert werden kann, solange auf einer Phase eine stärkere Vergrößerung stattfindet als auf einer anderen Phase und somit ein Angleichen der elektrischen Größen, hier der Stromstärken, erfolgt. Auch ein Einspeisen von elektrischer Leistung in einem Teilnehmernetz kann zu einem Angleichen der Stromstärken auf den Phasen führen und insbesondere kann es möglich sein, dass ein Teilnehmer auf einer Phase eine elektrische Leistung beziehen kann, die dazu führen würde, dass die durch das Verteilnetz vorgegebene maximale Stromstärke überschritten würde, jedoch durch das Einspeisen innerhalb des Teilnehmernetzes die an dem Übergabepunkt zwischen Verteilnetz und Teilnehmernetz fließende Stromstärke den maximal zulässigen Wert nicht überschreitet.

Gemäß einem Ausführungsbeispiel wird vorgeschlagen, dass der Differenzbetrag der gemessenen elektrischen Größen dynamisch ermittelt wird. Das bedeutet, dass im laufenden Betrieb, beispielsweise in Intervallen, beispielsweise in Sekunden, 30 Sekunden-, 1 Minuten- oder 10 Minuten-Schritten die elektrischen Größen gemessen werden. Anschließend kann dynamisch der laufende Betrieb des Teilnehmers verändert werden, und eine Verringerung der Differenzbeträge dynamisch bewirkt werden. Es stellt sich somit ein Regelkreis ein, bei dem der Differenzbetrag der elektrischen Größen dynamisch verringert wird. Eine zeitliche Verzögerung beim Anpassen der elektrischen Größen des Teilnehmers kann dazu genutzt werden, dass der Regelkreis nicht überschwingt.

Gemäß einem Ausführungsbeispiel wird vorgeschlagen, dass die elektrischen Größen zwischen dem Übergabepunkt und dem Teilnehmer, insbesondere zwischen dem Übergabepunkt und dem Teilnehmernetz durch eine Messeinrichtung, insbesondere ein Smart Meter, gemessen werden. Ein Smart Meter kann neben der Messung der Gesamtsystemleistung auch phasenspezifisch eine Messung von elektrischen Größen, insbesondere von Strom, Spannung, Phasenlage, Leistung und dergleichen durchführen. Dies kann in einer zeitlichen Auflösung von wenigen Sekunden bis wenigen Minuten erfolgen. Mit Hilfe dieser zeitnah erfassten Messwerte ist es möglich, die Differenzbeträge zu ermitteln.

Um den Teilnehmer entsprechend anzusteuern, wird vorgeschlagen, dass Betriebsinformationen zum Betrieb der Teilnehmer von der Messeinrichtung zu dem Teilnehmer übermittelt werden. Insbesondere können die Betriebsinformationen über das Teilnehmernetz selbst, beispielsweise mittels Powerline Communication, übertragen werden. Andere Übertragungsformen, beispielsweise über ein lokales Netz, drahtgebunden oder drahtlos, sind ebenfalls möglich. In den Betriebsinformationen kann unter anderem der Differenzbetrag zwischen zwei Phasen angegeben sein. Auch ist es möglich, dass die Differenzbeträge mit Vorzeichen angegeben sind und die Teilnehmer entsprechend angesteuert werden können. Betriebsinformation kann insbesondere auch das Verhältnis/der Wert von Wirk- und Blindleistung (cos phi, ebenfalls vorzeichenbehaftet) beinhalten. Auch kann in den Betriebsinformationen bereits eine konkrete Steueranweisung für den Teilnehmer enthalten sein, beispielsweise eine Angabe, welchen Wert und welches Vorzeichen die elektrische Größe, insbesondere die Stromstärke eines Teilnehmers auf einer jeden Phase haben soll. Somit kann durch die Messeinrichtung zentral für eine Vielzahl von Teilnehmern Betriebsinformationen ermittelt werden.

Auch ist es möglich, dass lediglich Tendenzen, das heißt Informationen über das Erhöhen oder Verringern der elektrischen Größe, insbesondere der Stromstärke gegenüber dem aktuellen Wert einem Teilnehmer mitgeteilt wird und der Teilnehmer autark darüber entscheidet, wie stark diese Veränderung ist. Jeder Teilnehmer empfängt diese Information und kann entsprechend seinen Betrieb verändern, so dass der Differenzbetrag sich dynamisch verändert und entsprechend Anpassungen erfolgen können. Erfasst die Messeinrichtung dann auch noch den Gradient der Veränderung ist es möglich, die Betriebsinformationen dynamisch an die Veränderung anzupassen und beispielsweise auch eine Steilheit der Veränderung dem Teilnehmer mitzuteilen, um ein Überschwingen des Regelkreises zu verhindern.

Somit kann die Messeinrichtung für jeden Teilnehmer einen P-, einen PI-, als auch einen PID-Regler beinhalten. Die entsprechenden Regler können auch in der Messeinrichtung und dem Teilnehmer sowie nur in dem Teilnehmer vorhanden sein.

Wie bereits erwähnt, kann der Übergabepunkt zwischen Verteilnetz und Teilnehmernetz zwischen gleichen oder unterschiedlichen Spannungsebenen angeordnet sein. Insbesondere kann das Teilnehmernetz ein Hausverteilnetz und das Verteilnetz ein öffentliches Niederspannungsnetz, insbesondere ein Ortsverteilnetz, welches vom Ortsnetztrafo ausgeht sein. In diesem Fall sind Teilnehmernetz und Verteilnetz spannungsgleich, insbesondere mit einer Maximalspannung von 400 V. Es ist jedoch auch möglich, dass der Übergabepunkt zwischen dem Mittelspannungs- und dem Niederspannungsnetz, insbesondere an einer Ortsnetztrafostation, angeordnet ist. In diesem Fall sind das Teilnehmernetz und das Verteilnetz mit unterschiedlichen Spannungen betrieben.

Der Teilnehmer ist vorzugsweise ein zwei, drei oder mehrphasig betriebener Teilnehmer. Der Teilnehmer bezieht zum Betrieb elektrische Leistung aus zwei oder mehr Phasen gleichzeitig oder speist zwei oder mehr Phasen gleichzeitig mit elektrischer Leistung. Eine Besonderheit kann darin liegen, dass wenn der Teilnehmer ein Erzeuger, insbesondere eine Stromquelle ist, dieser auch an nur einer Phase betrieben werden kann und trotzdem eine Symmetrierung der elektrischen Größen am Übergabepunkt bewirken kann. Insbesondere eine Photovoltaikanlage kann an auch nur an einer Phase betrieben werden. Wird im Teilnehmernetz auf dieser Phase elektrische Leistung verbraucht, ist es möglich, dass im Teilnehmernetz auf dieser Phase eine Leistung von über der durch die technische Anschlussbedingung vorgegebenen Maximalleistung, insbesondere über 4,6 kVA, liegen kann. Am Übergabepunkt liegt aufgrund der im Teilnehmernetz vorhandenen Stromquelle trotzdem an dieser Phase nur eine solche Leistung an, dass eine Unsymmetrie weiterhin kleiner als 4,6 kVA beträgt.

Ein weiterer Gegenstand ist ein Verfahren zum Betreiben einer Messstelle nach Anspruch 10.

Die Messstelle wird dabei zwischen dem mehrphasigen Verteilnetz und dem mehrphasigen Teilnehmernetz betrieben. Die Messstelle kann unmittelbar an dem Übergabepunkt oder im Bereich des Übergabepunktes die Messung durchführen. Die elektrische Größe wird dabei an zumindest zwei Phasen des Teilnehmernetzes erfasst. Anschließend kann in der Messstelle der Differenzbetrag gemessener elektrischer Größen zwischen jeweils zwei Phasen ermittelt werden. Wird an mehr als zwei Phasen gemessen, kann eine Summe der jeweiligen Differenzbeträge gebildet werden. Auch kann eine Berücksichtigung der Phasenwinkel erfolgen und eine Verschiebung des Sternpunktes aus dem Mittelpunkt/Nullpunkt heraus detektiert werden.

Nachdem die Differenzbeträge bzw. die Summe der Differenzbeträge bzw. die Verschiebung des Sternpunktes ermittelt wurde, kann in der Messstelle ein Satz von Betriebsinformationen erstellt werden, der an den Teilnehmer bzw. die Teilnehmer in dem Teilnehmernetz übermittelt wird. Jeder Teilnehmer kann gesondert Betriebsinformationen erhalten oder die gleichen Betriebsinformationen können an alle Teilnehmer übermittelt werden. Hierbei kann in den Betriebsinformationen entweder der Wert des Differenzbetrages, der Wert der Summe, oder andere Informationen zum Betrieb der Teilnehmer übertragen werden. Insbesondere kann auch eine Information übertragen werden, ob der Teilnehmer den von ihm beanspruchten Wert der elektrischen Größe vergrößern oder verkleinern soll. Auch kann eine Steilheit der Veränderung angegeben werden. Jeder Teilnehmer kann dann entsprechend seinen Betrieb anpassen und die elektrischen Größen am Übergabepunkt verändern sich, so dass sich auch die Differenzbeträge verändern. Die Betriebsinformationen sind dergestalt, dass wenn die Teilnehmer darauf reagieren, der Differenzbetrag verringert wird.

Mittels einer Steuereinrichtung können die empfangenen Informationen, sei es die Differenzbeträge, die Summe der Differenzbeträge oder die Betriebsinformationen ausgewertet werden und der Teilnehmer kann dann entsprechend derart betrieben werden, dass sich die elektrische Größe des Teilnehmers an den Phasen abhängig von dem empfangenen Differenzbetrag oder den empfangenen Betriebsinformationen derart verändert, dass sich der Differenzbetrag an dem Übergabepunkt verringert.

Ein weiterer Gegenstand ist eine elektrische Messstelle, die insbesondere im Bereich des Übergabepunktes zwischen dem mehrphasigen Teilnehmernetz und dem mehrphasigen Verteilnetz misst, nach Anspruch 11. Hierbei misst die Messstelle vorzugsweise an zumindest zwei Phasen eine elektrische Größe, insbesondere die Stromstärke, die elektrische Leistung, das Potential, die Blind- und/oder Wirkleistung oder die Phasenverschiebung zwischen den Phasen. Anhand dieser gemessenen Werte ermittelt die Messstelle zumindest einen Differenzbetrag der gemessenen elektrischen Größen. Dieser Differenzbetrag kann anschließend von der Messstelle an die Teilnehmer übermittelt werden. Auch ist es möglich, dass in der Messstelle aus dem Differenzbetrag, der Summe der Differenzbeträge und/oder der Verschiebung des Sternpunktes Betriebsinformationen abgeleitet werden, die anschließend an den Teilnehmer übermittelt werden. Auch ist es möglich, dass die Informationen an eine Mehrzahl von in dem Teilnehmernetz betriebenen Teilnehmer übertragen werden. Der Teilnehmer kann dann entsprechend der empfangenen Information betrieben werden, derart, dass sich der Differenzbetrag verringert.

Nachfolgend wird der Gegenstand anhand einer ein Ausführungsbeispiel zeigenden Zeichnung näher erläutert. In der Zeichnung zeigen:
- Fig. 1a: ein Zeigerdiagramm eines dreiphasigen Netzes mit symmetrischer Belastung;
- Fig. 1b: das Zeigerdiagramm nach Fig. 1a zusammen mit einem Sternpunkt im Nullpunkt;
- Fig. 2a: ein Zeigerdiagramm eines dreiphasigen Netzes mit unsymmetrischer Belastung;
- Fig. 2b: das Zeigerdiagramm nach Fig. 2a zusammen mit einem Sternpunkt der aus dem Nullpunkt verschoben ist;
- Fig. 2c: das Zeigerdiagramm nach Fig. 2b mit einer Kompensation der Differenzströme;
- Fig. 3: eine schematische Ansicht eines mit drei Teilnehmern betriebenen Teilnehmernetzes und eines Übergabepunktes zwischen einem Ortsverteilnetz und einem Hausverteilnetz;
- Fig. 4: eine schematische Ansicht eines Ortsverteilnetzes mit angeschlossenen Hausverteilnetzen, wobei das Ortsverteilnetz als Teilnehmernetz und das Mittelspannungsnetz als Verteilnetz angesehen werden kann.

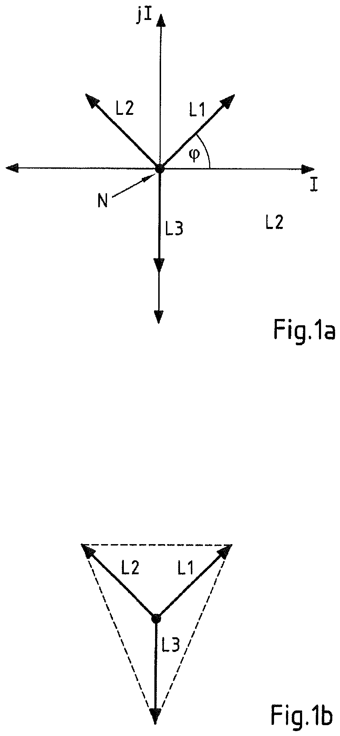

Fig. 1a zeigt zur Erläuterung ein Zeigerdiagramm eines dreiphasigen Teilnehmernetzes. Beispielhaft ist das Zeigerdiagramm der Stromstärke der drei Phasen L1, L2 und L3 dargestellt. Zu erkennen ist in der Fig. 1, dass die Ströme der drei Phasen L1, L2, L3 einen Realanteil und einen Imaginäranteil (I, jI) aufweisen. Die Phasenlage, also der Winkel ϕ einer jeden Phase verändert sich laufend mit ωt, wobei ω=2π^{∗}f, mit f gleich der Netzfrequenz ist. In der Darstellung führt dies dazu, dass die Zeiger mit der Netzfrequenz um den Nullpunkt N rotieren. Der Strom einer jeden Phase L1, L2, L3 entspricht der Länge des Zeigers (dessen Betrag) und setzt sich aus der Summe von realen und imaginären Teil zusammen.

In der Fig. 1a ist zu erkennen, dass die Stromstärken, also die Längen der Zeiger L1, L2, L3 gleich lang sind und somit eine Symmetrie der Stromstärken aller drei Phasen vorliegt. Dies ist auch in Fig. 1b zu erkennen. Darin ist zu erkennen, dass die Ströme zwischen der jeweiligen Phase L1, L2 und L3 und dem Nulleiter N sich derart summieren, dass der Sternpunkt dieser Ströme und der Nullpunkt N zusammenfallen.

Zur Vermeidung von größeren Unsymmetrien im Verteilnetz ist vorgeschrieben, dass pro Phase ein Teilnehmer maximal 4,6 kVA verbrauchen darf oder maximal 4,6 kVA einspeisen darf. Diese Maximalleistung ist abhängig von der zulässigen Stromstärke pro Phase.

Beispielsweise ist in den Niederlanden pro Phase eine Maximalstromstärke von 35 A je Phase üblich. Lädt ein Elektrofahrzeug an allen drei Phasen, und befindet sich kein weiterer Großverbraucher in dem Netz, so kann das Elektrofahrzeug an jeder Phase ohne Einschränkung laden und somit beispielsweise 32 A je Phase beziehen. Dies bedeutet eine Ladeleistung von 22 kW. In dem Moment, in dem im Netz ein weiterer Verbraucher an einer Phase arbeitet, beispielsweise mit 16 A, stehen für das Laden nur noch weitere 19 A an dieser Phase zur Verfügung. Bisher wurde die Ladeleistung des Elektrofahrzeugs dann auf jeder Phase auf diesen Wert beschränkt, so dass die Gesamtstromstärke auf der am meisten belasteten Phase den maximal zulässigen Wert nicht überschritt. Dies führte dazu, dass die Ladeleistung von 3 x 32 A je Phase auf nur noch 3 x 19 A je Phase und somit nur noch 13 kW beschränkt wurde. Dadurch wurde sichergestellt, dass die Maximalbelastung einer Phase nicht überschritten wird.

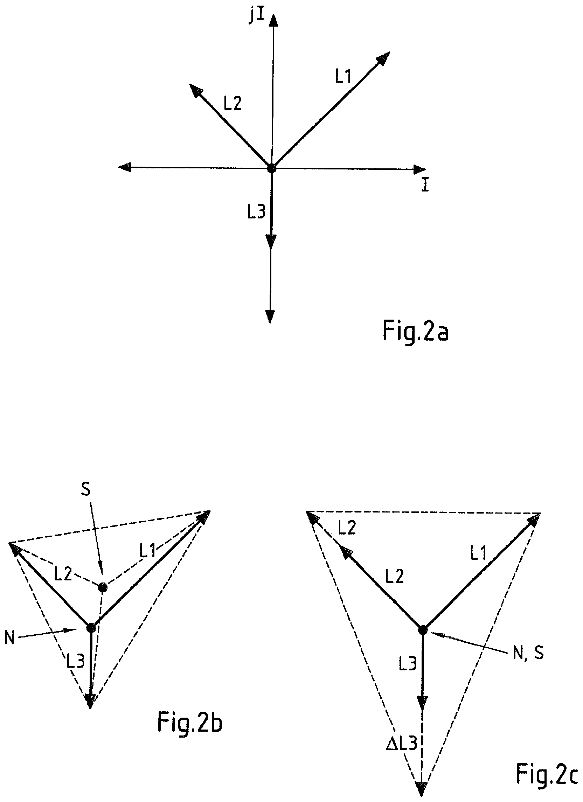

Eine Phasenunsymmetrie ist beispielsweise in der Fig. 2a dargestellt. Zu erkennen ist, dass auf Phase L1 der größte Strom fließt, auf Phase L2 eine mittlere Stromstärke und auf Phase L3 die kleinste Stromstärke. Die maximal zulässige Phasenunsymmetrie in Deutschland beträgt 4,6 kVA. Bei 230 V also 20 A. Um diese maximale Phasenunsymmetrie stets einhalten zu können, sind herkömmlich alle Teilnehmer derart eingestellt, dass wenn sie mit höherer Leistung betrieben sind, mehrphasig betrieben werden müssen und an den einzelnen Phasen symmetrisch betrieben werden müssen.

In der Fig. 2b ist zu erkennen, dass aufgrund der Unsymmetrie die Summe der Ströme ungleich 0 ist. Dabei erfolgt eine Verschiebung des Sternpunktes S gegenüber dem Nullpunkt N. Gegenständlich wird nun vorgeschlagen, entsprechende Betriebsinformationen an die Teilnehmer zu übermitteln, um zumindest die Summe der Differenzbeträge anzugleichen, insbesondere eine Verschiebung des Sternpunktes S in den Nullpunkt N bzw. in Richtung des Nullpunktes N zu bewirken. In dem gezeigten Fall könnten die Stromstärke auf L2 und L3 erhöht werden, um deren Beträge gleich der Stromstärke auf Phase L1 zu erhöhen. Dies ist beispielhaft in der Fig. 2c dargestellt.

Zu erkennen ist, dass durch Erhöhen der Stromstärke auf der Phase L2 um ΔL2 und Erhöhen der Stromstärke auf der Phase L3 um ΔL3 die Summe der Differenzbeträge der Stromstärken gleich 0 wird. Hierdurch wird der in Fig. 2b verschobene Sternpunkt S in den Nullpunkt N zurück verschoben. In der Fig. 2c sind somit die Änderungen der Stromstärken ΔL2 und ΔL3 derart gewählt, dass sich der Sternpunkt S in den Nullpunkt N verschiebt und somit keine Ausgleichströme zwischen den einzelnen Phasen und dem Nullleiter N fließen.

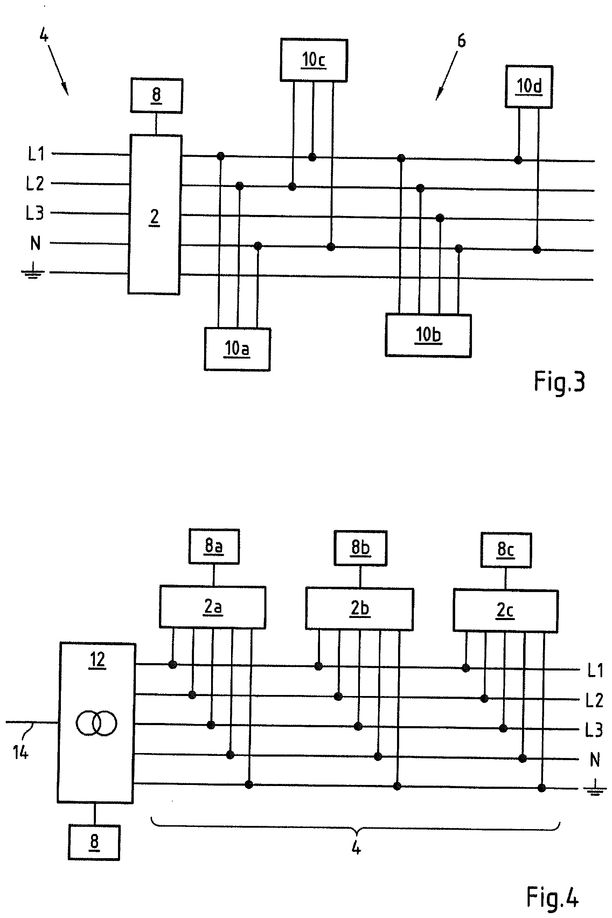

Fig. 3 zeigt beispielhaft einen Übergabepunkt 2 an einem Ortsnetz 4, welches als Niederspannungsnetz als Verteilnetz verstanden werden kann. Jenseits des Ortsnetz' 4 ist ein Teilnehmernetz 6 an dem Übergabepunkt 2 angeschlossen, welches beispielsweise eine Hausverteilung ist. Der Übergabepunkt 2 kann am Hausanschlusspunkt als auch im der Hausverteilkasten angeordnet sein. An dem Übergabepunkt 2 ist ein Messgerät 8 angeordnet. Mittels des Messgeräts 8, welches beispielsweise ein Smart-Meter ist, kann die Leistung einer jeden Phase L1, L2, L3 ermittelt werden. Ferner kann die Phasenlage, Stromstärke, die Spannung sowie Wirk- und Blindleistung ermittelt werden. Gegenständlich reicht es aus, wenn an dem Messgerät zumindest eine dieser elektrischen Größen, vorzugsweise die Stromstärke, ermittelt wird.

Ferner ist in der Fig. 3 zu erkennen, dass an dem Teilnehmernetz 6 verschiedene mehrphasig betriebene Teilnehmer 10a-c angeschlossen sind. Der Teilnehmer 10a kann beispielsweise eine mindestens zweiphasig betriebene Photovoltaikanlage sein. Der Teilnehmer 10c kann beispielsweise ein mindestens zweiphasig betriebener Batteriespeicher sein und der Teilnehmer 10b kann beispielsweise ein Elektrofahrzeug sein, welches dreiphasig angeschlossen ist. Zu erkennen ist, dass die Photovoltaikanlage 10a an den Phasen L1 und L2 sowie dem Nullleiter N angeschlossen ist. Ebenso ist der Batteriespeicher 10c an den Phasen L1, L2 und dem Nullleiter N angeschlossen, das Elektrofahrzeug ist an den Phasen L1, L2, L3 und dem Nullleiter N angeschlossen. Ein Anschluss an den Erdungsleiter für jeden der Teilnehmer versteht sich und ist daher nicht eingezeichnet. Schließlich ist in der Fig. 3 ein einphasig betriebener Verbraucher 10d dargestellt, der beispielsweise an der Phase L1 angeschlossen ist.

Gegenständlich überwacht das Messgerät 8 laufend zumindest eine der elektrischen Größen am Übergabepunkt 2. Anhand der gemessenen Größen werden Betriebsinformationen für die Teilnehmer 10a-c bestimmt, so dass die Differenzbeträge der elektrischen Größen im Wesentlichen ausgeglichen werden, und anschließend an die Teilnehmer 10a-c übermittelt. Dies soll am folgenden Beispiel verdeutlicht werden.

Der Teilnehmer 10d wird beispielsweise mit 10 A an der Phase L1 betrieben. Zunächst wird im nachfolgenden Beispiel davon ausgegangen, dass die Photovoltaikanlage 10a als auch der Batteriespeicher 10c nicht in Betrieb sind. Durch den Betrieb des Teilnehmers 10d an der Phase L1 ist diese somit mit bereits 10 A belastet. Diese Belastung wird durch das Messgerät 8 erfasst. Das Elektrofahrzeug 10b, welches dreiphasig betrieben wird, muss die Vorgaben hinsichtlich einer maximalen Belastbarkeit und Unsymmetrie der Phasen normalerweise beachten. Hierbei ist zu beachten, dass der Einfachheit halber nur das Elektrofahrzeug betrachtet wird, wobei in der Regel es nicht das das einzelne Gerät ist, welches die Forderung nach Symmetrie beachten muss, sondern die Einhaltung der Forderung gilt für die Summe der von einem Kunden betriebenen Geräte. Da die Phase L1 bereits mit 10 A belastet ist, und beispielsweise eine maximale Belastung bei 35 A liegt, müsste das Elektrofahrzeug 10b an der Phase L1 mit maximal 25 A betrieben werden. Herkömmlich führte dies dazu, dass das Elektrofahrzeug 10b auch an den Phasen L2 und L3 nur mit diesen maximal 25 A betrieben wird. Gegenständlich wird nun vorgeschlagen, dass durch das Messgerät 8 ermittelt wird, welche Belastung an jeder Phase L1, L2, L3 anliegt und einen Differenzbetrag der gemessenen Größe zwischen jeweils zwei Phasen L1/L2, L2/L3 und L3/L1 ermittelt. Hieraus kann die Unsymmetrie am Übergabepunkt 2 festgestellt werden. In dem gegebenen Beispiel kann anschließend das Elektrofahrzeug 10b zum unsymmetrischen Betreiben an den drei Phasen L1, L2, L3 angewiesen werden. Im einfachsten Fall wird hierzu dem Elektrofahrzeug 10b von dem Messgerät eine Betriebsinformation dahingehend mitgeteilt, dass auf den Phasen L2 und L3 ein Laden mit voller Leistung möglich ist und auf der Phase L1 ein Laden nur mit einer begrenzten Leistung. Dies würde beispielsweise dazu führen, dass das Elektrofahrzeug 10b auf der Phase L1 weiterhin nur mit 25 A lädt, auf den Phasen L2 und L3 jedoch mit 35 A laden kann. In Summe führte dies dazu, dass jede der drei Phasen L1, L2, L3 mit maximal 35 A belastet wäre und somit die Differenzbeträge am Übergabepunkt 2 gleich Null wären.

Gegenständlich reicht es bereits aus, wenn durch entsprechende Betriebsinformationen die Differenzbeträge zwischen den Phasen verringert werden. Vorliegend läge ein Differenzbetrag zwischen der Phase L1 und L2 von 10 A und zwischen der Phase L1 und L3 von ebenfalls 10 A vor. Es kann bereits ausreichen, dem Elektrofahrzeug 10b durch das Messgerät 8 mitzuteilen, dass auf den Phasen L2 und L3 eine höhere Stromstärke genutzt werden kann als auf der Phase L1. Bereits dies führte zu einer Verringerung des Differenzbetrags der elektrischen Stromstärke.

Ausgehend von dem gezeigten Beispiel werden nun auch die Photovoltaikanlage 10a und der Batteriespeicher 10c betrachtet. Während des Betriebs der Photovoltaikanlage 10a kann diese beispielsweise auf der Phase L1 mehr als 4,6 kVA einspeisen. In dem Moment, in dem das Messgerät 8 feststellt, dass der Verbraucher 10d mit 10 A betrieben wird, kann die Photovoltaikanlage 10a durch das Messgerät 8 bereits angewiesen werden, auf der Phase L1 eine um 10 A höhere Stromstärke als auf der Phase L2 bereitzustellen. Diese erhöhte Stromstärke würde auf der Phase L1 dazu führen, dass innerhalb des Teilnehmernetzes 6 auf der Phase L1 ein Ausgleich zwischen Verbrauch und Einspeisung stattfände und die Phase L1 am Übergabepunkt 2 unbelastet wäre.

Nun kann die Photovoltaikanlage 10a darüber hinaus auf der Phase L1 und der Phase L2 eine Rückspeisung in das Ortsnetz 4 durchführen, indem zusätzlich zu den ohnehin auf der Phase L1 benötigten 10 A beispielsweise weitere 20 A an den Phasen L1 und L2 zur Verfügung gestellt werden. Die Photovoltaikanlage 10a würde somitunsymmetrisch betrieben, da an der Phase L1 10 A mehr zur Verfügung gestellt wird als an der Phase L2. Dieser unsymmetrische Betrieb wird jedoch durch den Betrieb des Teilnehmers 10d innerhalb des Teilnehmernetzes 6 ausgeglichen und am Übergabepunkt 2 wird die Vorgabe hinsichtlich der maximal zulässigen Unsymmetrie eingehalten.

Der Batteriespeicher 10c kann beispielsweise so betrieben werden, dass wenn festgestellt wird, dass bereits ein Verbraucher an der Phase L1 angeschlossen ist, der Batteriespeicher 10c an der Phase L1 nicht lädt, sondern nur an der Phase L2 Durch das Laden an der Phase L2 des Batteriespeichers 10 kann die Photovoltaikanlage 10a angewiesen werden, auch auf der Phase L2 eine erhöhte Leistung zur Verfügung zu stellen, welche dann unmittelbar in dem den Teilnehmernetz 6 durch den Batteriespeicher 10c verbraucht wird. Wird nun zusätzlich beispielsweise das Elektrofahrzeug 10a angeschlossen, kann der Batteriespeicher 10c angewiesen werden, sowohl auf der Phase L1 als auch auf der Phase L2 eine maximale Leistung zur Verfügung zu stellen. Die Photovoltaikanlage 10a kann angewiesen werden, auf der Phase L1 eine erhöhte Leistung gegenüber der Phase L2 zur Verfügung zu stellen.

Das Elektrofahrzeug 10b kann dann auf der Phase L2 mit einer Maximalleistung geladen werden, auf der Phase L1 mit einer demgegenüber verringerten Leistung, da ja bereits der Teilnehmer 10d im Teilnehmernetz 6 vorhanden ist und auf der Phase L3 mit einer Stromstärke, die dazu führt, dass die Differenzbeträge am Übergabepunkt 2 möglichst gering sind.

Es versteht sich, dass eine Vielzahl von Beispielen denkbar sind, wie durch einen unsymmetrischen Betrieb von Teilnehmern, insbesondere Verbrauchern und Stromquellen innerhalb eines Teilnehmernetzes 6 möglichen Unsymmetrien am Übergabepunkt 2 entgegengewirkt werden kann. Durch entsprechendes Einstellen zumindest der Stromstärken kann eine Sternpunktverschiebung aus dem Nullpunkt heraus verringert, vorzugsweise vollständig kompensiert werden, so dass am Übergabepunkt 2 die Summe der Stromstärken auch unter Beachtung ihrer jeweiligen Vorzeichen gleich null ist.

Entsprechendes kann beispielsweise auch innerhalb eines Ortsnetz 4 erfolgen, wie in Fig. 4 dargestellt. Fig. 4 zeigt das Ortsnetz 4, welches in diesem Fall als Teilnehmernetz betrachtet wird. Über einen Ortsnetztransformator 12 ist das Ortsnetz 4 an einem Mittelspannungsnetz 14 angeschlossen. An dem Ortsnetztrafo 12 ist ein Messgerät 8 angeschlossen, welches die Last an jeder Phase L1, L2, L3 innerhalb des Ortsnetz' 4 überwacht. Insbesondere kann Stromstärke, Spannung, Wirk- und Blindleistung sowie Phasenverschiebung zwischen den Phasen L1, L2, L3 gemessen werden.

An dem Ortsnetz 4 sind die Teilnehmer über Übergabepunkte 2a, 2b, 2c angeschlossen, an denen jeweils Messgeräte 8a, 8b, 8c angeschlossen sind. Die Teilnehmer können beispielsweise entsprechend den Beispielen in Fig. 3 betrieben werden und sind vorzugsweise einzelne Haushalte. Durch eine geeignete Kommunikation zwischen dem Messgerät 8 und den jeweils den Teilnehmern zugeordneten Messgeräten 8a-8c ist es möglich, die Teilnehmer anzuweisen, unsymmetrisch die Phasen L1-L3 zu belasten bzw. zu beaufschlagen. Durch entsprechende Anweisung an die Messgeräte 8a-8c kann innerhalb eines jeden Hausnetzes 6, an welches die Teilnehmern angeschlossen sind, eine unsymmetrische Belastung der Phasen L1-L3 erfolgen. So könnten Photovoltaikanlage und Batteriespeicher angewiesen werden, unsymmetrisch die Phasen L1-L3 mit elektrischem Strom zu beaufschlagen und gleichfalls können mehrphasig betriebene Verbraucher angewiesen werden, unsymmetrisch an den Phasen L1-L3 betrieben zu werden.

Im Ergebnis soll erreicht werden, dass an dem Ortsnetztrafo 12, der im vorliegenden Fall der Übergabepunkt ist, eine möglichst große Symmetrie vorliegt, das heißt dass im Zeigerdiagramm der Phasen L1, L2, L3 eine möglichst geringe Sternpunktverschiebung, vorzugsweise ein vollständiger Ausgleich der Stromstärken unter Berücksichtigung der Vorzeichen erreicht wird.

Mit Hilfe des gegenständlichen Verfahrens als auch der gegenständlichen Vorrichtungen ist es möglich, durch einen unsymmetrischen Betrieb von Teilnehmern innerhalb eines Teilnehmernetzes einer Unsymmetrie am Übergabepunkt entgegenzuwirken. Es führt zu einer Lastoptimierung als auch zu einer erhöhten maximalen Leistungsaufnahme jedes einzelnen Teilnehmers.

## Patentansprüche

1. Verfahren zum Betreiben eines an zumindest zwei Phasen eines Teilnehmernetzes (6) betriebenen Teilnehmers (10a-c) umfassend:
- Messen jeweils einer elektrischen Größe an zumindest zwei Phasen eines Übergabepunktes (2) zwischen einem Verteilnetz und dem Teilnehmernetz (6),
- Ermitteln eines Differenzbetrags der gemessenen elektrischen Größe zwischen jeweils zwei Phasen, und
- Betreiben des Teilnehmers (10a-c) derart, dass der Differenzbetrag verringert wird,
**dadurch gekennzeichnet, dass**
zumindest zwei Teilnehmer (10a-c) in dem Teilnehmernetz (6) betrieben werden, wobei ein Teilnehmer (10a-c) an zumindest einer Phase als elektrische Last betrieben wird und ein Teilnehmer (10a-c) an zumindest einer Phase als Stromquelle betrieben wird, derart, dass der Differenzbetrag der gemessenen elektrischen Größe am Übergabepunkt (2) einen Grenzwert unterschreitet.

2. Verfahren nach Anspruch 1, **dadurch gekennzeichnet, dass** die an zumindest einer der Phasen gemessene elektrische Größe die elektrische Stromstärke an der jeweiligen Phase und/oder das elektrische Potential der jeweiligen Phase und/oder die elektrische Leistung der jeweiligen Phase und/oder eine Phasendifferenz zwischen Strom und Spannung an der jeweiligen Phase ist.

3. Verfahren nach Anspruch 1 oder 2, **dadurch gekennzeichnet, dass** das Teilnehmernetz (6) zumindest drei Phasen (L1, L2, L3) aufweist, dass die elektrische Größe an den zumindest drei Phasen (L1, L2, L3) gemessen wird, dass eine Summe der Differenzbeträge der gemessenen elektrische Größen ermittelt wird und dass der Teilnehmer (10a-c) derart betrieben wird, dass die Summe der Differenzbeträge verringert wird.

4. Verfahren nach einem der vorangehenden Ansprüche, **dadurch gekennzeichnet, dass** der Differenzbetrag dadurch verringert wird, dass eine zulässige Stromstärke für zumindest eine Phase des Teilnehmers (10a-c) eingestellt wird und/oder dass die elektrischen Leistung für zumindest eine Phase des Teilnehmers (10a-c) eingestellt wird und/oder dass eine elektrische Blind- und/oder Wirkleistung für zumindest eine Phase des Teilnehmers (10a-c) eingestellt wird und/oder dass eine Phasendifferenz zwischen Strom und Spannung für zumindest eine Phase des Teilnehmers (10a-c) eingestellt wird.

5. Verfahren nach einem der vorangehenden Ansprüche, **dadurch gekennzeichnet, dass** der Teilnehmer (10a-c) derart betrieben wird, dass die elektrische Größen der Phasen an dem Übergabepunkt (2) zumindest betragsmäßig einander angenähert, insbesondere gleich sind und/oder dass der Teilnehmer (10a-c) derart betrieben wird, dass die Summer der Differenzbeträge minimiert wird.

6. Verfahren nach einem der vorangehenden Ansprüche, **dadurch gekennzeichnet, dass** der Differenzbetrag der gemessenen elektrischen Größe dynamisch ermittelt wird, und das der laufende Betrieb des Teilnehmers (10a-c) derart verändert wird, dass der Differenzbetrag dynamisch verringert wird.

7. Verfahren nach einem der vorangehenden Ansprüche, **dadurch gekennzeichnet, dass** die elektrische Größe zwischen dem Übergabepunkt (2) und dem Teilnehmer (10a-c), insbesondere zwischen dem Übergabepunkt (2) und dem Teilnehmernetz (6) durch eine Messeinrichtung, insbesondere ein Smart-Meter gemessen werden und/oder dass Betriebsinformationen zum Betrieb der Teilnehmer (10a-c) von der Messeinrichtung zu dem Teilnehmer (10a-c) übermittelt werden, insbesondere dass die Betriebsinformationen über das Teilnehmernetz (6) übermittelt werden.

8. Verfahren nach einem der vorangehenden Ansprüche, **dadurch gekennzeichnet, dass** das Teilnehmernetz (6) ein Hausverteilnetz ist und dass das Verteilnetz ein öffentliches Niederspannungsnetz ist oder dass das Teilnehmernetz (6) ein öffentliches Niederspannungsnetz und dass das Verteilnetz ein Mittelspannungsnetz (14) ist.

9. Verfahren nach einem der vorangehenden Ansprüche, **dadurch gekennzeichnet, dass** der Teilnehmer (10a-c) ein zumindest zweiphasiger Verbraucher oder Erzeuger ist.

10. Verfahren zum Betreiben einer Messstelle an einem Übergabepunkt (2) zwischen einem mehrphasigen Verteilnetz und einem mehrphasigen Teilnehmernetz (6) umfassend:
- Messen jeweils einer elektrischen Größe an zumindest zwei Phasen des Teilnehmernetzes (6),
- Ermitteln eines Differenzbetrags der gemessenen elektrischen Größe zwischen jeweils zwei Phasen,
- Übermitteln von Betriebsinformationen von der Messstelle an einen an zumindest zwei Phasen des Teilnehmernetzes (6) betriebenen Teilnehmer (10a-c), wobei die Betriebsinformationen geeignet sind, den Teilnehmer (10a-c) derart zu betreiben, dass der Differenzbetrag verringert wird,
**dadurch gekennzeichnet,**
- **dass** zumindest zwei Teilnehmer (10a-c) in dem Teilnehmernetz (6) betrieben werden, wobei ein Teilnehmer (10a-c) an zumindest einer Phase als elektrische Last betrieben wird und ein Teilnehmer (10a-c) an zumindest einer Phase als Stromquelle betrieben wird, derart, dass der Differenzbetrag der gemessenen elektrischen Größe am Übergabepunkt (2) einen Grenzwert unterschreitet.

11. Elektrisches mehrphasiges Teilnehmernetz umfassend eine elektrische Messstelle und zuminndest zwei Teilnehmer, die elektrische Messstelle umfassend
- Messmittel eingerichtet zum Messen jeweils einer elektrischen Größe an zumindest zwei Phasen eines mehrphasigen Teilnehmernetzes (6) an einem Übergabepunkt (2) zwischen einem mehrphasigen Verteilnetz und dem Teilnehmernetz (6),
- Rechenmittel eingerichtet zum Ermitteln eines Differenzbetrags der gemessenen elektrischen Größe zwischen jeweils zwei Phasen,
- Sendemittel eingerichtet zum Übermitteln des Differenzbetrags von der Messstelle an einen an zumindest zwei Phasen des Teilnehmernetzes (6) betriebenen Teilnehmer (10a-c), so dass der Teilnehmer (10a-c) derart betrieben wird, dass der sich der Differenzbetrag verringert
- **dadurch gekennzeichnet,**
- **dass** die zumindest zwei Teilnehmer (10a-c) in dem Teilnehmernetz (6) betrieben sind, wobei ein Teilnehmer (10a-c) an zumindest einer Phase als elektrische Last angeschlossen ist und ein Teilnehmer (10a-c) an zumindest einer Phase als Stromquelle angeschlossen ist, derart, dass der Differenzbetrag der gemessenen elektrischen Größe am Übergabepunkt (2) einen Grenzwert unterschreitet.

## Claims

1. Method for operating a participant (10a-c) operated on at least two phases of a utility network (6), comprising
- measuring a respective electrical quantity at at least two phases of a transfer point (2) between a distribution network and the participant network (6),
- determining a difference in the measured electrical quantity between two phases, and
- operating the participant (10a-c) in such a way that the difference is reduced, **characterised in that**
at least two participants (10a-c) are operated in the participant network (6), wherein one participant (10a-c) is operated on at least one phase as an electrical load and one participant (10a-c) is operated on at least one phase as a current source, in such a way that the difference in the measured electrical quantity at the transfer point (2) falls below a limit value.

2. Method according to claim 1, **characterized in that** the electrical quantity measured at at least one of the phases is the electrical amperage at the respective phase and/or the electrical potential of the respective phase and/or the electrical power of the respective phase and/or a phase difference between current and voltage at the respective phase.

3. Method according to claim 1 or 2, **characterized in that** the participant network (6) has at least three phases (L1, L2, L3), **in that** the electrical quantity is measured at the at least three phases (L1, L2, L3), **in that** a sum of the difference amounts of the measured electrical quantities is determined and **in that** the participant (10a-c) is operated in such a way that the sum of the difference amounts is reduced.

4. Method according to one of the preceding claims, **characterized in that** the difference amount is reduced by setting an admissible amperage for at least one phase of the participant (10a-c) and/or by setting the electrical power for at least one phase of the participant (10a-c) and/or by setting an electrical reactive and/or active power for at least one phase of the participant (10a-c) and/or by setting a phase difference between current and voltage for at least one phase of the participant (10a-c).

5. Method according to one of the preceding claims, **characterized in that** the participant (10a-c) is operated in such a way that the electrical quantities of the phases at the transfer point (2) approximate one another at least in terms of amount, in particular are the same, and/or **in that** the participant (10a-c) is operated in such a way that the summation of the difference amounts is minimized.

6. Method according to one of the preceding claims, **characterized in that** the difference amount of the measured electrical quantity is determined dynamically, and **in that** the current operation of the participant (10a-c) is changed in such a way that the difference amount is reduced dynamically.

7. Method according to one of the preceding claims, **characterized in that** the electrical quantity between the transfer point (2) and the participant (10a-c), in particular between the transfer point (2) and the participant network (6), is measured by a measuring device, in particular a smart meter, and/or **in that** operating information on the operation of the participants (10a-c) is transmitted from the measuring device to the participant (10a-c), in particular **in that** the operating information is transmitted via the participant network (6).

8. Method according to one of the preceding claims, **characterized in that** the participant network (6) is a home distribution network and that the distribution network is a public low-voltage network or that the participant network (6) is a public low-voltage network and that the distribution network is a medium-voltage network (14).

9. Method according to one of the preceding claims, **characterized in that** the participant (10a-c) is an at least two-phase consumer or producer.

10. Method of operating a meter at a transfer point (2) between a multi-phase distribution network and a multi-phase participant network (6), comprising:
- measuring a respective electrical quantity at at least two phases of the participant network (6),
- determining a difference of the measured electrical quantity between two phases,
- transmitting operating information from the meter to a participant (10a-c) operated on at least two phases of the participant network (6), the operating information being suitable for operating the participant (10a-c) in such a way that the difference is reduced,
**characterized in that**,
- at least two participants (10a-c) are operated in the participant network (6), wherein one participant (10a-c) is operated as an electrical load on at least one phase and one participant (10a-c) is operated as a current source on at least one phase in such a way that the difference in the measured electrical quantity at the transfer point (2) falls below a limit value.

11. Electrical multi-phase participant network comprising an electrical meter and at least two participants, the electrical meter comprising
- measuring means arranged for measuring a respective electrical quantity on at least two phases of a multi-phase utility network (6) at a transfer point (2) between a multi-phase distribution network and the utility network (6),
- calculation means arranged for determining a difference of the measured electrical quantity between two phases,
- transmitting means arranged for transmitting the difference amount from the measuring point to a participant (10a-c) operated in at least two phases of the utility network (6), so that the participant (10a-c) is operated in such a way that the difference amount is reduced
- **characterized in that**,
- at least two participants (10a-c) are operated in the participant network (6), wherein one participant (10a-c) is operated as an electrical load on at least one phase and one participant (10a-c) is operated as a current source on at least one phase in such a way that the difference in the measured electrical quantity at the transfer point (2) falls below a limit value.

## Revendications

1. Procédé pour la gestion d'un abonné (10a-c) géré sur au moins deux phases d'un réseau d'abonnés (6), ledit procédé consistant :
- à mesurer à chaque fois une grandeur électrique sur au moins deux phases d'un point d'interconnexion (2) situé entre un réseau de distribution et le réseau d'abonnés (6),
- à déterminer un montant de la différence de la grandeur électrique mesurée à chaque fois entre deux phases, et
- à gérer l'abonné (10a-c) de manière telle, que le montant de la différence soit diminué,
**caractérisé**
**en ce qu'**au moins deux abonnés (10a-c) sont gérés dans le réseau d'abonnés (6), où un abonné (10a-c) est géré sur au moins une phase considérée comme une charge électrique, et un abonné (10a-c) est géré sur au moins une phase considérée comme une source de courant, de manière telle que le montant de la différence de la grandeur électrique mesurée au niveau du point d'interconnexion (2) soit inférieur à une valeur limite.

2. Procédé selon la revendication 1, **caractérisé en ce que** la grandeur électrique mesurée sur au moins l'une des phases est l'intensité du courant électrique sur la phase respective et/ou est le potentiel électrique de la phase respective et/ou est la puissance électrique de la phase respective et/ou est une différence de phase entre le courant et la tension au niveau de la phase respective.

3. Procédé selon la revendication 1 ou 2, **caractérisé en ce que** le réseau d'abonnés (6) présente au moins trois phases (L1, L2, L3), **en ce que** la grandeur électrique est mesurée sur les phases (L1, L2, L3) au moins au nombre de trois, **en ce que** l'on détermine une somme des montants des différences concernant les grandeurs électriques mesurées, et **en ce que** l'abonné (10a-c) est géré de manière telle, que la somme des montants des différences soit diminuée.

4. Procédé selon l'une quelconque des revendications précédentes, **caractérisé en ce que** le montant de la différence est diminué par le fait qu'une intensité de courant admissible est réglée pour au moins une phase de l'abonné (10a-c) et/ou **en ce que** la puissance électrique est réglée pour au moins une phase de l'abonné (10a-c) et/ou **en ce qu'**une puissance réactive et/ou active est réglée pour au moins une phase de l'abonné (10a-c) et/ou **en ce qu'**une différence de phase entre le courant et la tension est réglée pour au moins une phase de l'abonné (10a-c).

5. Procédé selon l'une quelconque des revendications précédentes, **caractérisé en ce que** l'abonné (10a-c) est géré de manière telle, que les grandeurs électriques des phases, mesurées au niveau du point d'interconnexion (2), soient proches les unes des autres au moins en termes de montants, en particulier que lesdites grandeurs électriques soient identiques, et/ou **en ce que** l'abonné (10a-c) est géré de manière telle, que la somme des montants des différences soit minimisée.

6. Procédé selon l'une quelconque des revendications précédentes, **caractérisé en ce que** le montant de la différence des grandeurs électriques ayant été mesurées est déterminé de façon dynamique, et **en ce que** la gestion courante de l'abonné (10a-c) est modifiée de manière telle, que le montant de la différence soit diminué de façon dynamique.

7. Procédé selon l'une quelconque des revendications précédentes, **caractérisé en ce que** la grandeur électrique mesurée entre le point d'interconnexion (2) et l'abonné (10a-c), en particulier entre le point d'interconnexion (2) et le réseau d'abonnés (6), est celle mesurée par un dispositif de mesure, en particulier un compteur intelligent, et/ou **en ce que** des informations de gestion servant à la gestion des abonnés (10a-c) sont transmises à partir du dispositif de mesure, jusqu'à l'abonné (10a-c), en particulier **en ce que** les informations de gestion sont transmises via le réseau d'abonnés (6).

8. Procédé selon l'une quelconque des revendications précédentes, **caractérisé en ce que** le réseau d'abonnés (6) est un réseau de distribution domestique, et **en ce que** le réseau de distribution est un réseau public basse tension, ou bien **en ce que** le réseau d'abonnés (6) est un réseau public basse tension et **en ce que** le réseau de distribution est un réseau moyenne tension (14).

9. Procédé selon l'une quelconque des revendications précédentes, **caractérisé en ce que** l'abonné (10a-c) est un consommateur ou un producteur au moins à deux phases.

10. Procédé pour la gestion d'un emplacement de mesure se trouvant au niveau d'un point d'interconnexion (2) situé entre un réseau de distribution à plusieurs phases et un réseau d'abonnés (6) à plusieurs phases, ledit procédé consistant :
- à mesurer à chaque fois une grandeur électrique sur au moins deux phases du réseau d'abonnés (6),
- à déterminer un montant de la différence de la grandeur électrique mesurée à chaque fois entre deux phases,
- à transmettre des informations de gestion provenant de l'emplacement de mesure, lesdites informations étant transmises à un abonné (10a-c) géré sur au moins deux phases du réseau d'abonnés (6), où les informations de gestion sont appropriées pour gérer l'abonné (10a-c), de manière telle que le montant de la différence soit diminué,
**caractérisé**
**en ce qu'**au moins deux abonnés (10a-c) sont gérés dans le réseau d'abonnés (6), où un abonné (10a-c) est géré sur au moins une phase considérée comme une charge électrique, et un abonné (10a-c) est géré sur au moins une phase considérée comme une source de courant, de manière telle que le montant de la différence de la grandeur électrique mesurée au niveau du point d'interconnexion (2) soit inférieur à une valeur limite.

11. Réseau électrique à plusieurs phases pour des abonnés, ledit réseau électrique comprenant un emplacement de mesure électrique et au moins deux abonnés, ledit emplacement de mesure électrique comprenant :
- des moyens de mesure mis en place pour mesurer à chaque fois une grandeur électrique s'appliquant à au moins deux phases d'un réseau d'abonnés (6) à plusieurs phases, ladite mesure étant effectuée au niveau d'un point d'interconnexion (2) situé entre un réseau de distribution à plusieurs phases et le réseau d'abonnés (6),
- des moyens de calcul mis en place pour déterminer un montant de la différence de la grandeur électrique mesurée à chaque fois entre deux phases,
- des moyens d'envoi mis en place pour la transmission du montant de la différence, ladite transmission étant mise en œuvre à partir de l'emplacement de mesure, jusqu'à un abonné (10a-c) géré sur au moins deux phases du réseau d'abonnés (6), de sorte que l'abonné (10a-c) est géré de manière telle, que le montant de la différence diminue,
**caractérisé**
**en ce que** les abonnés (10a-c) au moins au nombre de deux sont gérés dans le réseau d'abonnés (6), où un abonné (10a-c) est raccordé à au moins une phase considérée comme une charge électrique, et un abonné (10a-c) est raccordé à au moins une phase considérée comme une source de courant, de manière telle que le montant de la différence de la grandeur électrique mesurée au niveau du point d'interconnexion (2) soit inférieur à une valeur limite.
